# EUROPEAN PATENT APPLICATION

(11) **EP 4 715 646 A1**
(43) Date of publication of application: **25.03.2026**
(21) Application number: 24222752.8
(22) Date of filing: 23.12.2024
(51) Int. Cl.: G06F 21/57, G06F 21/60, G06F 9/445, H04N 1/00

(54) **INFORMATION PROCESSING SYSTEM, PROGRAM, AND INFORMATION PROCESSING METHOD**

(30) Priority: 24.09.2024 JP 2024165562
(71) Applicant: FUJIFILM Business Innovation Corp., Minato-ku Tokyo (JP)
(72) Inventor: SHIMIZU, Kenichiro, Yokohama-shi, Kanagawa (JP); CHOU, Gun, Yokohama-shi, Kanagawa (JP); HATANO, Kei, Yokohama-shi, Kanagawa (JP)
(74) Representative: Kurig, Thomas

(57) **Abstract**

An information processing system includes: a functional configuration unit; and a processor, in which the processor is configured to receive, from a user, operating software, which is software for operating the functional configuration unit, and command data for the functional configuration unit, operate the functional configuration unit based on the operating software received from the user, and cause the functional configuration unit to execute a command included in the command data.

## Description

### BACKGROUND OF THE INVENTION

### (i) Field of the Invention

The present disclosure relates to an information processing system, a program, and an information processing method.

### (ii) Description of Related Art

For example, JP2012-064063A discloses a printing system including an authentication server, a print reception server, and a storage server connected to an NGN, and a public terminal server that causes a plurality of public terminals attached to a plurality of printers installed in public places to function as thin clients, provides an operation screen, and receives an input, in which the print reception server receives a print application from a user terminal of a user authenticated by the authentication server, print data is temporarily stored in the storage server, and the public terminal server transmits the print data from the storage server to the printers linked to the plurality of public terminals based on the input from the public terminal of the user authenticated by the authentication server, and prints out the data.

### SUMMARY OF THE INVENTION

An object of the present invention is to provide an information processing system, a program, and an information processing method that enable a user of the information processing system to use the information processing system by executing software desired by the user.

According to a first aspect of the present disclosure, there is provided an information processing system including: a functional configuration unit; and a processor, in which the processor is configured to: receive, from a user, operating software, which is software for operating the functional configuration unit, and command data for the functional configuration unit, operate the functional configuration unit based on the operating software received from the user, and cause the functional configuration unit to execute a command included in the command data.

According to a second aspect of the present disclosure, in the information processing system according to the first aspect, the processor may be configured to: further receive reference data referred to by the functional configuration unit; and cause the functional configuration unit to execute the command referring to the reference data.

According to a third aspect of the present disclosure, in the information processing system according to the first or second aspect, the processor may be configured to: store the operating software only in a volatile memory.

According to a fourth aspect of the present disclosure, in the information processing system according to the third aspect, the processor may be configured to: erase the operating software in a case in which the command of the functional configuration unit is completed.

According to a fifth aspect of the present disclosure, in the information processing system according to any one of the first to fourth aspects, the processor may be configured to: execute receiving software recorded on a non-rewritable recording medium to receive the operating software.

According to a sixth aspect of the present disclosure, in the information processing system according to the fifth aspect, other operating software for operating the functional configuration unit may be recorded in a memory, and the processor may be configured to: receive the operating software from the user in a state in which execution of the other operating software is stopped.

According to a seventh aspect of the present disclosure, in the information processing system according to any one of the first to sixth aspects, the processor may be configured to: further receive authentication information associated with the operating software; receive identification information; and operate the functional configuration unit in a case in which the identification information and the authentication information correspond to each other.

According to an eighth aspect of the present disclosure, there is provided a program causing a processor to execute: receiving, from a user, operating software, which is software for operating a functional configuration unit, and command data for the functional configuration unit, operating the functional configuration unit based on the operating software received from the user, and causing the functional configuration unit to execute a command included in the command data.

According to a ninth aspect of the present disclosure, there is provided an information processing method including: receiving, from a user, operating software, which is software for operating a functional configuration unit, and command data for the functional configuration unit, operating the functional configuration unit based on the operating software received from the user, and causing the functional configuration unit to execute a command included in the command data.

According to the information processing system of the first aspect, it is possible to use the information processing system by executing software desired by the user, for the user of the information processing system.

According to the information processing system of the second aspect, it is possible to use a function based on a command in which the functional configuration unit refers to the reference data, for the user.

According to the information processing system of the third aspect, it is possible to further improve security in a case of using the information processing system for the user of the information processing system, compared to a case in which operating software is also stored in non-volatile memory.

According to the information processing system of the fourth aspect, it is possible to improve security for other user who uses the information processing system next in a case of using the information processing system, compared to in a case in which the operating software is next received in a state where the operating software is stored.

According to the information processing system of the fifth aspect, it is easy to prevent reception software from being tampered with.

According to the information processing system according to the sixth aspect, in the information processing system in which a user who does not have operating software can also use the information processing system, it is possible to execute and use software desired by the user, for a user who has operating software.

According to the information processing system of the seventh aspect, it is possible to improve security in a case of using the information processing system for the user who uses the information processing system, compared to a case in which the functional configuration unit is operated without checking a correspondence between identification information and authentication information data.

According to the program of the eighth aspect, it is possible to use the information processing system by executing the software desired by the user, for the user of the information processing system.

According to the information processing method of the ninth aspect, it is possible to use the information processing system by executing the software desired by the user, for the user of the information processing system.

### BRIEF DESCRIPTION OF THE DRAWINGS

Exemplary embodiment(s) of the present invention will be described in detail based on the following figures, wherein:
Fig. 1 is a diagram showing a system configuration of an information use environment according to a first exemplary embodiment;
Fig. 2 is a block diagram showing a configuration of a multifunction peripheral according to the first exemplary embodiment, which is a diagram showing a state in which functional configuration units are not operating;
Fig. 3 is a block diagram showing a configuration of the multifunction peripheral according to the exemplary embodiment following Fig. 2, which is a diagram showing a state in which functional configuration units are operating;
Fig. 4 is a block diagram showing a configuration of a computer according to the first exemplary embodiment;
Fig. 5 is a block diagram showing a configuration of a server according to the first exemplary embodiment;
Fig. 6 is a sequence diagram showing an example in which a multifunction peripheral according to a first execution example of the first exemplary embodiment communicates with a computer and executes a printing function;
Fig. 7 is a flowchart showing an example in which the multifunction peripheral according to the first execution example executes a printing function, following Fig. 6;
Fig. 8 is a sequence diagram showing an example in which a multifunction peripheral according to a second modification example of the first execution example communicates with a server and executes a printing function;
Fig. 9 is a sequence diagram showing an example in which a multifunction peripheral according to a second execution example communicates with a computer and executes a document reading function;
Fig. 10 is a sequence diagram showing an example in which a multifunction peripheral according to a modification example of the second execution example of the first exemplary embodiment communicates with a computer and executes a copying function;
Fig. 11 is a sequence diagram showing an example of executing a printing function in a case in which a multifunction peripheral according to a third execution example communicates with a plurality of computers;
Fig. 12 is a sequence diagram showing an example of executing a printing function in a case in which a multifunction peripheral according to a modification example of the third execution example communicates with a plurality of computers;
Fig. 13 is a block diagram showing a configuration of a multifunction peripheral according to a second exemplary embodiment, which is a diagram showing a state in which functional configuration units are not operating;
Fig. 14 is a block diagram showing a configuration of the multifunction peripheral according to the second exemplary embodiment following Fig. 13, which is a diagram showing a state in which functional configuration units are operating;
Fig. 15 is a sequence diagram showing an example in which the multifunction peripheral according to the second exemplary embodiment communicates with a computer and executes a printing function;
Fig. 16 is a flowchart showing an example in which the multifunction peripheral according to the second exemplary embodiment executes a printing function, following Fig. 15; and
Fig. 17 is a flowchart showing an example in which a multifunction peripheral according to a modification example of the second exemplary embodiment communicates with a computer and determines whether or not reception of firmware is successful.

### DETAILED DESCRIPTION OF THE INVENTION

Hereinafter, examples of exemplary embodiments of the present disclosure will be described with reference to the drawings. The identical reference numerals are given to the identical or equivalent components and parts in each drawing. In addition, the dimensional ratios in the drawings are exaggerated for convenience of description and may differ from the actual ratios.

### [First Exemplary Embodiment]

### (Configuration)

### (Information Use Environment 10)

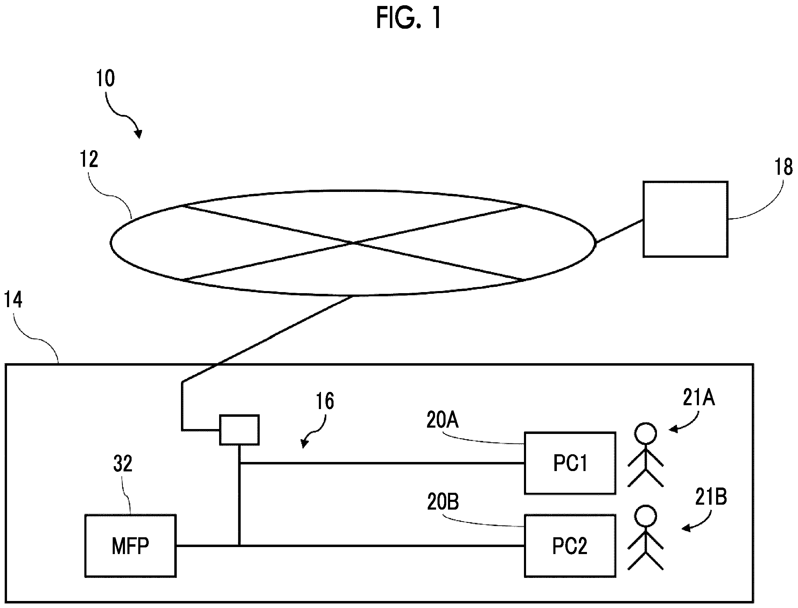

Fig. 1 is a diagram showing a system configuration of an information use environment 10 according to a first exemplary embodiment of the present disclosure. As shown in Fig. 1, the information use environment 10 includes a shared facility 14, where a multifunction peripheral 32 and a plurality of computers 20A and 20B are installed. The multifunction peripheral 32 and the plurality of computers 20A and 20B are connected to an in-facility network 16. The in-facility network 16 is connected to the Internet 12. The information use environment 10 is further configured such that an information management server 18 is connected via the Internet 12.

The computer 20Ais a device used by a first user 21A. The computer 20B is a device used by a second user 21B. The computer 20A and the computer 20B are both similar devices. In the following description, in a case in which there is no need to distinguish between the computer 20A and the computer 20B, the computer 20A and the computer 20B will be referred to as "computers 20". Similarly, in a case in which there is no distinction between the first user 21A and the second user 21B, the first user 21A and the second user 21B will be referred to as "users 21".

The first user 21A and the second user 21B are persons who belong to different organizations. In other words, the shared facility 14 is a facility used by a plurality of persons who belong to different organizations. In addition, the first user 21A and the second user 21B both belong to an organization different from the manager or the like of the shared facility 14. Furthermore, the managers of the multifunction peripheral 32 and the information management server 18 both belong to organizations different from the users 21 and the managers of the shared facility 14.

### (Multifunction Peripheral 32)

The multifunction peripheral 32 is a so-called multifunction peripheral device that has a plurality of functions such as a printing function, a scanning function, a copying function, and a facsimile function. The multifunction peripheral 32 is an example of an "information processing system" in the present exemplary embodiment.

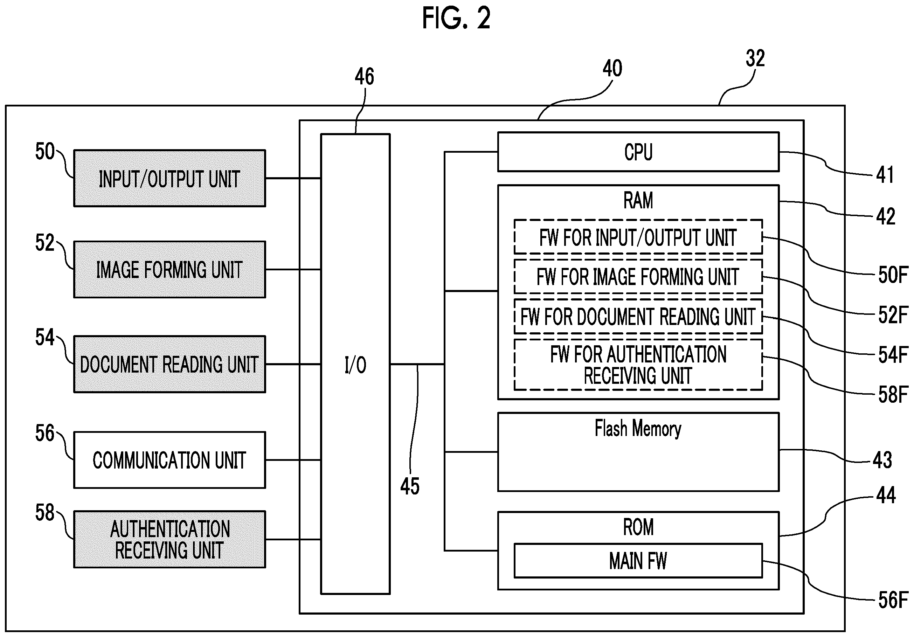

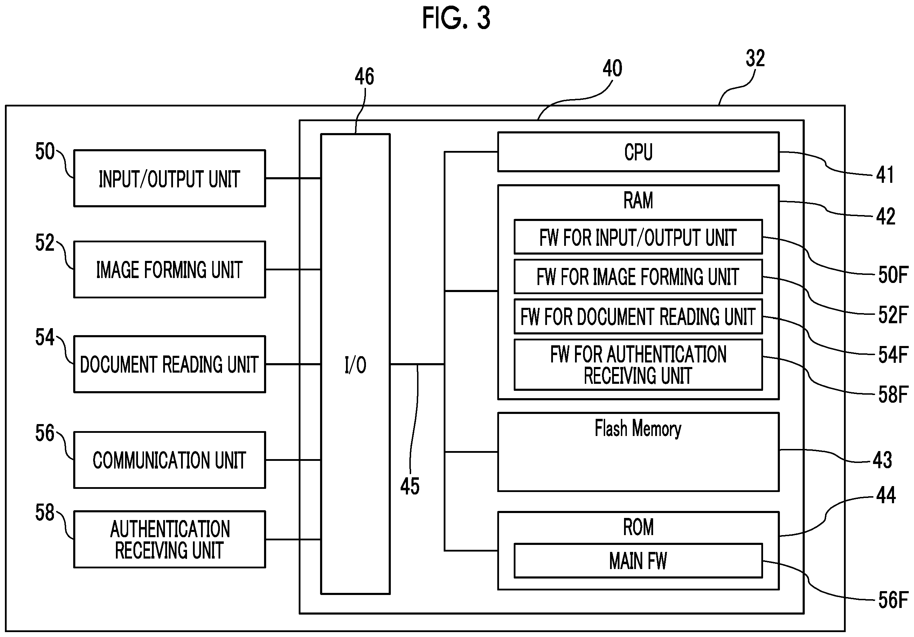

Figs. 2 and 3 are block diagrams showing a hardware configuration of the multifunction peripheral 32 according to the present exemplary embodiment. As shown in Fig. 2, the multifunction peripheral 32 includes a control unit 40, an input/output unit 50, an image forming unit 52, a document reading unit 54, a communication unit 56, and an authentication receiving unit 58. These components are connected to each other via an input/output interface (I/O) 46. The input/output unit 50, the image forming unit 52, the document reading unit 54, and the authentication receiving unit 58 are examples of the "functional configuration unit" in the present exemplary embodiment.

The control unit 40 is a device that controls each unit of the multifunction peripheral 32. The control unit 40 has a function as a computer, and as shown in Fig. 2, includes a central processing unit (CPU) 41, a random access memory (RAM) 42, a flash memory 43, and a read only memory (ROM) 44. The CPU 41, the RAM 42, the flash memory 43, and the ROM 44 are connected to each other via a control bus 45.

The CPU 41 is a central arithmetic processing unit, and executes various programs including main firmware 56F such as an information synchronization program, and controls each unit. In addition, in the present exemplary embodiment, the CPU 41 is an example of a "processor" in the present disclosure. The flash memory 43 temporarily stores data and the like. Furthermore, the flash memory 43 is an example of a "non-volatile memory" in the present exemplary embodiment. That is, the flash memory 43 retains the stored information even in a case in which the current to the control unit 40 is interrupted (for example, in a case in which the power supply to the multifunction peripheral 32 is interrupted).

The ROM 44 stores various programs including the main firmware 56F and various types of data. In addition, the ROM 44 is an example of "non-rewritable recording medium" in the present exemplary embodiment. The ROM 44 may be any non-rewritable recording medium.

The RAM 42 temporarily stores the main firmware 56F or data as a work area. Furthermore, the RAM 42 is an example of a "volatile memory" in the present exemplary embodiment. That is, in a case in which the current to the control unit 40 is interrupted (for example, in a case in which the power supply to the multifunction peripheral 32 is interrupted), the information stored in the RAM 42 is erased.

The input/output unit 50 is a device that receives instructions from the user 21 who uses the multifunction peripheral 32 and notifies the CPU 41 of the control unit 40 of the received instructions. The input/output unit 50 is also a device that presents information to the user 21 who uses the multifunction peripheral 32 in accordance with instructions from the CPU 41. As the input/output unit 50, a device that both receives input and displays information, such as a touch panel, is used. As will be described later, the input/output unit 50 realizes the above functions based on a procedure defined in firmware 50F for an input/output unit.

The image forming unit 52 is a configuration unit that forms an image on a recording medium such as paper. The image forming unit 52 forms an image on a recording medium using, for example, an electrophotographic method that performs charging, exposure, development, transfer, and fixing steps. The image forming unit 52 may form an image on the recording medium using other methods such as an inkjet method. As will be described later, the image forming unit 52 realizes the above functions based on a procedure defined in firmware 52F for an image forming unit.

The document reading unit 54 is a configuration unit (for example, a scanner) that reads an image of a document. The document reading unit 54 generates image data by optically reading the image of the document and converting the read image into a digital signal. As will be described later, the document reading unit 54 realizes the above functions based on a procedure defined in firmware 54F for a document reading unit.

The communication unit 56 is a configuration unit for communicating with another device such as a digital shadow server 22. Specifically, the communication unit 56 communicates with other devices by using communication means such as wired, wireless, Internet 12, intranet, and public lines such as telephone lines. The communication means may be communication means using voice, light, vibration, images, or the like.

The authentication receiving unit 58 is a configuration unit that receives authentication information of the user 21 who uses the multifunction peripheral 32. The authentication receiving unit 58 may have any configuration as long as the user 21 who uses the multifunction peripheral 32 can be identified. The authentication receiving unit 58 reads information such as an ID card possessed by the user 21 as an example, and reads the information included in the ID card to identify the individual of the user 21. As will be described later, the authentication receiving unit 58 realizes the above functions based on a procedure defined in firmware 58F for an authentication receiving unit.

The control unit 40 reads various programs including the main firmware 56F from the ROM 44 by the CPU 41, and executes the main firmware 56F using the RAM 42 as a work area. Furthermore, the communication unit 56 of the multifunction peripheral 32 operates as shown in Fig. 2 by the CPU 41 executing the main firmware 56F. That is, the main firmware 56F is an example of "receiving software" in the present exemplary embodiment.

Here, the input/output unit 50 operates in a case in which the firmware 50F for the input/output unit is stored in the RAM 42. In addition, the image forming unit 52 operates in a case in which the firmware 52F for the image forming unit is stored in the RAM 42. In addition, the document reading unit 54 operates in a case in which the firmware 54F for the document reading unit is stored in the RAM 42. In addition, the authentication receiving unit 58 operates in a case in which the firmware 58F for the authentication receiving unit is stored in the RAM 42. That is, each of the above-mentioned firmware is an example of "operating software" in the present exemplary embodiment.

After each of the above-mentioned firmware is stored in the RAM 42, any procedure may be used until the firmware is operated. In the present description, as an example, the CPU 41 transmits each piece of firmware stored in the RAM 42 to a RAM (not shown) of the corresponding functional configuration unit. The functional configuration unit realizes the functions of the functional configuration unit based on the firmware stored in the RAM 42. In the present exemplary embodiment, the RAM 42 may be able to refer to the data stored in each functional configuration unit.

Here, in the multifunction peripheral 32 according to the present exemplary embodiment, as shown in Fig. 2, the firmware for operating the input/output unit 50, the image forming unit 52, the document reading unit 54, and the authentication receiving unit 58 is not recorded in the ROM 44. That is, as shown in Fig. 3, in order to operate the input/output unit 50, the image forming unit 52, the document reading unit 54, or the authentication receiving unit 58, the multifunction peripheral 32 needs to acquire the firmware corresponding to the functional configuration unit from an external device. The method for acquiring the firmware will be described later.

### (Computer 20)

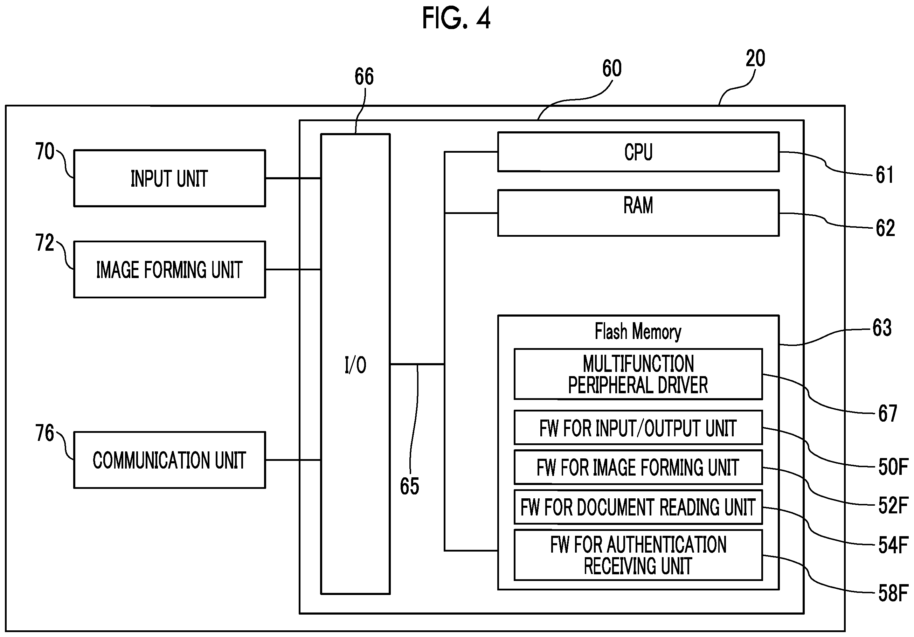

As shown in Fig. 4, the computer 20 includes a control unit 60, an input unit 70, an output unit 72, and a communication unit 76. Among the configurations of the computer 20, the configurations having the same names as the configurations of the multifunction peripheral 32 have the same functions except for the performance (processing capacity).

The input unit 70 is a configuration unit through which the user 21 who uses the computer 20 inputs commands to the computer 20. Examples of the input unit 70 include input devices such as a keyboard, a mouse, or a track pad.

The output unit 72 is a configuration unit that causes the user 21 who uses the computer 20 to perceive the execution result of the processing performed by a CPU 61. An example of the output unit 72 includes a display device such as a display.

As shown in Fig. 4, the control unit 60 includes a central processing unit (CPU) 61, a random access memory (RAM) 62, and a flash memory 63. The CPU 61, the RAM 62, and the flash memory 63 are connected to each other via a control bus 65.

Here, as shown in Fig. 4, the flash memory 63 records a multifunction peripheral driver 67, the firmware 50F for the input/output unit, the firmware 52F for the image forming unit, the firmware 54F for the document reading unit, and the firmware 58F for the authentication receiving unit.

The multifunction peripheral driver 67 is software used by the computer 20 to use the multifunction peripheral 32. More specifically, the CPU 61 reads the multifunction peripheral driver 67, which enables the user 21 who operates the computer 20 to use the multifunction peripheral 32.

The firmware 50F for the input/output unit is software that is read by the CPU 41 of the multifunction peripheral 32 and operates the input/output unit 50 as described above. In other words, the computer 20 in the present exemplary embodiment has the firmware for operating the functional configuration units of the above-described multifunction peripheral 32. The same applies to the firmware 52F for the image forming unit, the firmware 54F for the document reading unit, and the firmware 58F for the authentication receiving unit.

### (Information Management Server 18)

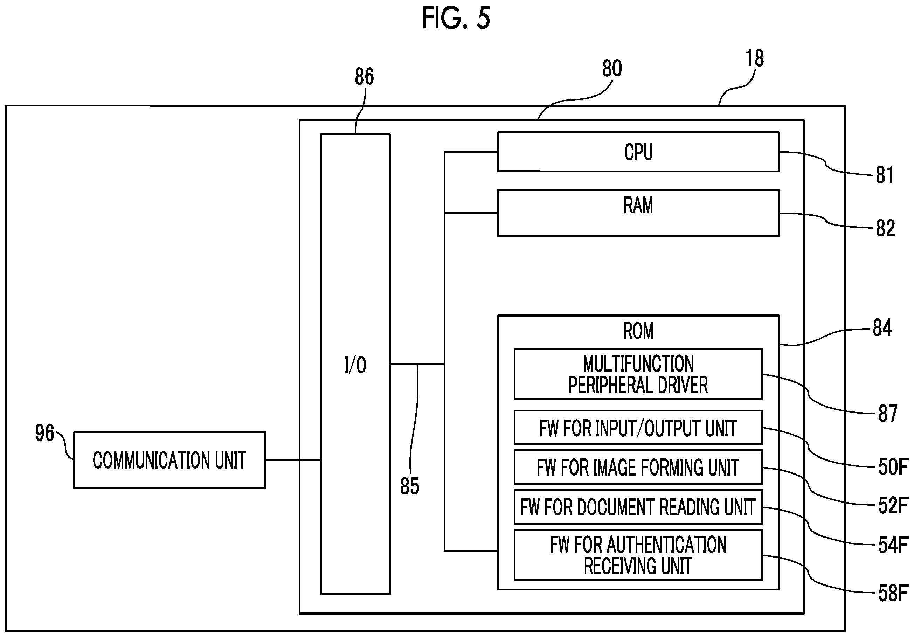

As shown in Fig. 5, the information management server 18 includes a control unit 80 and a communication unit 96. Among the configurations of the information management server 18, the configurations having the same names as the configurations of the multifunction peripheral 32 have the same functions except for the performance (processing capacity).

As shown in Fig. 5, the control unit 80 includes a central processing unit (CPU) 81, a random access memory (RAM) 82, and a read only memory (ROM) 84. The CPU 81, the RAM 82, and the ROM 84 are connected to each other via a control bus 85.

Here, as shown in Fig. 5, the ROM 84 records a multifunction peripheral driver 87, the firmware 50F for the input/output unit, the firmware 52F for the image forming unit, the firmware 54F for the document reading unit, and the firmware 58F for the authentication receiving unit.

The multifunction peripheral driver 87 is software used by the information management server 18 to use the multifunction peripheral 32. More specifically, the CPU 81 reads the multifunction peripheral driver 87, which enables the user 21 to use the multifunction peripheral 32 via the information management server 18.

Further, the information management server 18 in the present exemplary embodiment has the firmware for operating the functional configuration units of the above-described multifunction peripheral 32, in the same manner as the computer 20.

### (Untrusted Software of User 21)

The first user 21A and the second user 21B belong to different organizations, but each use a computer 20 in the shared facility 14. In other words, the software executed by the multifunction peripheral 32 disposed in the shared facility 14 is not necessarily trustworthy for each user 21. In other words, the multifunction peripheral 32 is disposed in a location that the user 21 cannot trust.

A specific reason why the software cannot be trusted is that even in a case in which the software of the multifunction peripheral 32 disposed in the shared facility 14 is tampered with by a malicious attacker, it is difficult for the user 21 to recognize the fact that the software has been tampered with.

Next, the procedure in which the CPU 41, CPU 61, or CPU 81 operates in a case in which the user 21 uses the multifunction peripheral 32 will be described below. In the following description, any configuration may be referred to as "starting" or "operating". In the following description, "start" refers to the transition of the configuration to a state in which the configuration can perform a function based on a command. Additionally, "operation" refers to executing an intended operation of the user 21 by the configuration functioning based on a command.

### [First Execution Example]

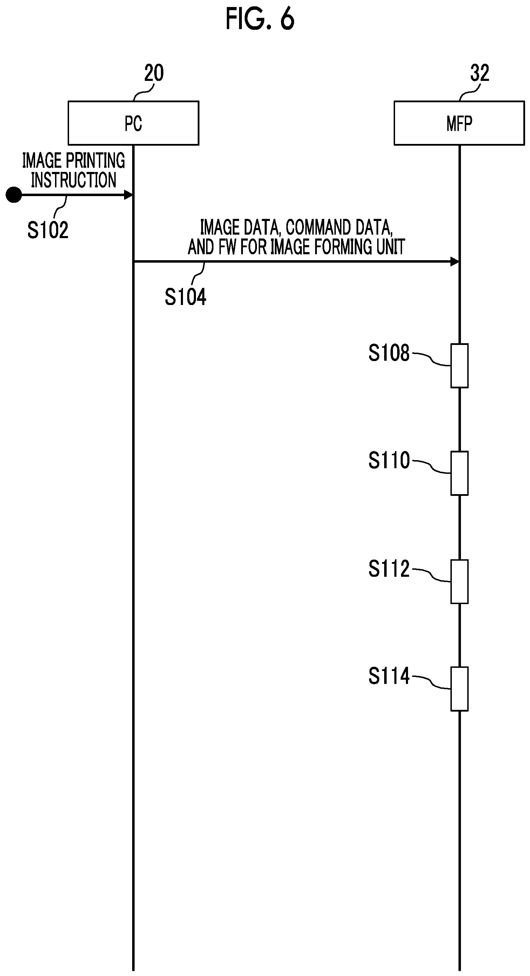

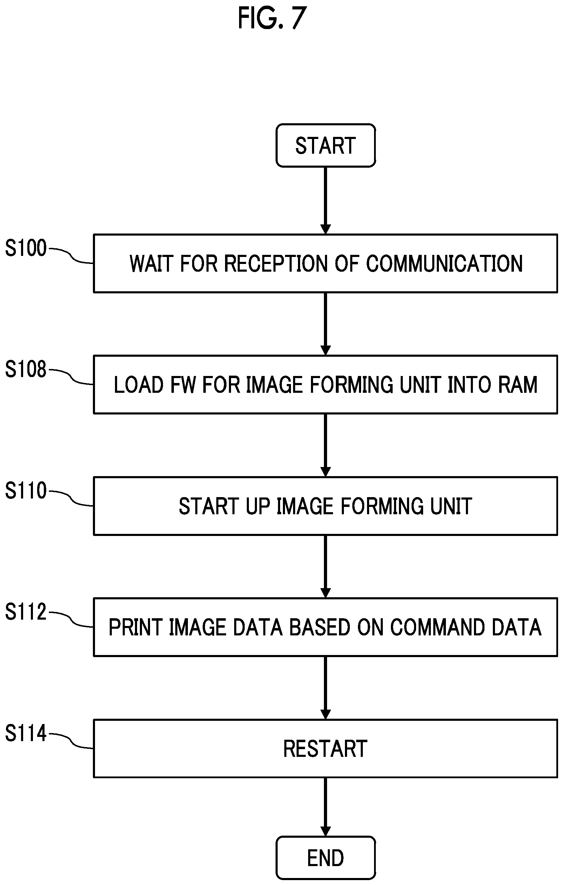

In a first execution example, a user 21 who uses a computer 20 uses a multifunction peripheral 32 to print image data. The procedure of the present example will be described with reference to Figs. 6 and 7.

### (Operation Procedure of Information Use Environment 10 and Operation Procedure of Multifunction Peripheral 32)

Fig. 6 is a sequence diagram showing an example in which the multifunction peripheral 32 according to the present example communicates with the computer 20 and executes a printing function. Fig. 7 is a flowchart showing an example in which the multifunction peripheral 32 according to the present example executes a printing function. Although not specifically described in the following procedures, it is assumed that command data for operating the functional configuration units of the multifunction peripheral 32, excluding firmware, is generated in a timely manner by the computer 20 executing the multifunction peripheral driver 67.

First, as shown in Fig. 7, the CPU 41 starts up the communication unit 56 and waits for reception of communication from an external device (S100). More specifically, the CPU 41 acquires the main firmware 56F from the ROM 44 and stores the main firmware 56F in the RAM 42. The CPU 41 operates the communication unit 56 based on the main firmware 56F stored in the RAM 42 to receive communication from an external device.

Although the procedure of 5100 shown in Fig. 7 is not shown in Fig. 6, this indicates that the CPU 41 operates the communication unit 56 in advance to prepare for receiving communication in S104, which will be described next. Here, in a case in which the user 21 operates the computer 20 to use the printing function based on image data, the procedure shown in Fig. 6 is executed.

More specifically, as shown in Fig. 6, the user 21 first inputs an instruction to print based on image data to the computer 20 (S102). Then, the CPU 61 of the computer 20 transmits the image data to be printed, command data including a command to print the image data, and the firmware 52F for the image forming unit to the multifunction peripheral 32 (S104). The CPU 41 of the multifunction peripheral 32 that has received the data from the computer 20 stores the received data in the RAM 42.

Next, the CPU 41 of the multifunction peripheral 32 loads the firmware 52F for the image forming unit, which is included in the received data, into the RAM 42 (S108). In other words, the CPU 41 makes the firmware 52F for the image forming unit available by referring to the RAM 42.

Next, the CPU 41 of the multifunction peripheral 32 starts up the image forming unit 52 using the firmware 52F for the image forming unit loaded in the RAM 42 (S110). In other words, the CPU 41 starts up the image forming unit 52 based on a procedure defined in the firmware 52F for the image forming unit loaded in the RAM 42. Furthermore, in a case in which the CPU 41 determines that the start-up of the image forming unit 52 is completed, the CPU 41 executes the next procedure of S112.

Next, the CPU 41 of the multifunction peripheral 32 prints the image data based on the command data included in the data received from the computer 20 (S112). More specifically, the CPU 41 reads command data stored in the RAM 42 and causes the image forming unit 52 to execute printing of the image data. Furthermore, in a case in which the CPU 41 determines that the procedure included in the command data is completed, that is, in a case in which the CPU 41 determines that printing is completed, the CPU 41 executes the next procedure of S114.

Next, the CPU 41 of the multifunction peripheral 32 restarts the multifunction peripheral 32 (S114). More specifically, the CPU 41 ends the software operating on the multifunction peripheral 32 based on the main firmware 56F operating on the multifunction peripheral 32, and releases the storage area that has been used in the RAM 42. Thereafter, the CPU 41 of the multifunction peripheral 32 executes a boot loader (not shown) to read the main firmware 56F, and ends the series of procedures.

Here, the CPU 41 of the multifunction peripheral 32 starts up the communication unit 56 in order to execute the main firmware 56F. In other words, after executing the procedure of S114, the CPU 41 executes the procedure of S 100 again. In other words, the CPU 41 waits for reception of communication again.

In the above procedure, the communication in S104 that is received by the CPU 41 of the multifunction peripheral 32 is based on the print instruction from the user 21 in S102. Therefore, in the present exemplary embodiment, it can be said that the CPU 41 receives firmware and command data from the user 21.

In the above procedure, the CPU 41 receives image data during communication in S104. This image data is referred to by the image forming unit 52 in the procedure of S112, and therefore can be said to be an example of "reference data referred to by the functional configuration unit" in the present exemplary embodiment.

Next, the actions and effects of the computer 20 and the multifunction peripheral 32 in the present exemplary embodiment operating in the above procedure will be described.

### (Actions and Effects)

The CPU 41 of the multifunction peripheral 32 according to the present example receives, from the user 21, firmware 52F for an image forming unit and command data which is data for commanding the image forming unit 52. The CPU 41 also executes the firmware 52F for the image forming unit received from the user 21 to operate the image forming unit 52, and causes the image forming unit 52 to print image data as a command included in the command data. Therefore, with the multifunction peripheral 32 according to the present example, in a case in which a user 21 uses a multifunction peripheral 32 that is disposed in a location that the user 21 cannot trust, the firmware 52F for the image forming unit provided from the computer 20 that the user 21 uses is executed. In other words, the user 21 may use the multifunction peripheral 32 by executing the software desired by the user 21.

Moreover, the multifunction peripheral 32 according to the present example further receives image data referred to by the image forming unit 52, and causes the image forming unit 52 to execute a command to print an image. Therefore, with the multifunction peripheral 32 according to the present example, the user may use the function of the image forming unit 52 printing image data, which is an example of a command for a functional configuration unit to refer to reference data.

Moreover, the CPU 41 according to the present example stores the firmware 52F for the image forming unit only in the volatile memory. Therefore, with the multifunction peripheral 32 according to the present example, compared to a case in which the firmware 52F for the image forming unit is also stored in non-volatile memory, restarting the multifunction peripheral 32 will not affect other data stored in the non-volatile memory. Accordingly, the security in the case of using the multifunction peripheral 32 may be improved for the user 21 who uses the multifunction peripheral 32.

Furthermore, in a case in which the command of the image forming unit 52 is completed, the CPU 41 according to the present example erases the firmware 52F for the image forming unit. Therefore, with the multifunction peripheral 32 according to the present example, security in the case of using the multifunction peripheral 32 may be improved for the next user 21 who uses the multifunction peripheral 32, compared to the case in which further firmware is received in a state in which the firmware 52F for the image forming unit is stored in the RAM 42.

Further, the CPU 41 according to the present example executes the main firmware 56F recorded in the ROM 44, and executes reception of the firmware 52F for the image forming unit. Therefore, with the multifunction peripheral 32 according to the present example, it is easy to prevent the main firmware 56F from being tampered with.

Further, the main firmware 56F according to the present example causes the CPU 41 to execute reception of firmware 52F for an image forming unit, which is software for operating the image forming unit 52, from the user 21. The main firmware 56F also causes the CPU 41 to receive command data which is data for commanding the image forming unit 52, and to execute the firmware 52F for the image forming unit received from the user 21 to operate the image forming unit 52. The main firmware 56F also causes the CPU 41 to execute the image forming unit 52 to print image data as a command included in the command data. Therefore, according to the program of the present example, a user 21 who uses a multifunction peripheral 32 that is disposed in a location that the user 21 cannot trust may use the multifunction peripheral 32 by executing the software desired by the user 21.

Next, a first modification example of the first execution example will be described.

### <First Modification Example>

In the first execution example, the multifunction peripheral 32 receives communication from the computer 20 in the procedure of S104. In the first modification example, instead of the procedure of S104, image data to be printed, command data including a command to print the image data, and firmware 52F for an image forming unit are received from a removable medium.

In other words, in the present modification example, the user 21 uses the computer 20 to record image data to be printed on the removable medium, command data including a command to print the image data, and the firmware 52F for the image forming unit. Then, in a case in which the multifunction peripheral 32 reads the recorded removable medium, the CPU 41 executes the same procedure as in the first execution example.

Any type of removable media may be used. Examples of removable media include a compact disk rewritable (CD-RW), a digital versatile disk rewritable (DVD-RW), and a universal serial bus (USB) memory.

In the present modification example, the same actions and effects as the first execution example may be obtained by following the same procedures as the first execution example.

Next, a second modification example of the first execution example will be described.

### <Second Modification Example>

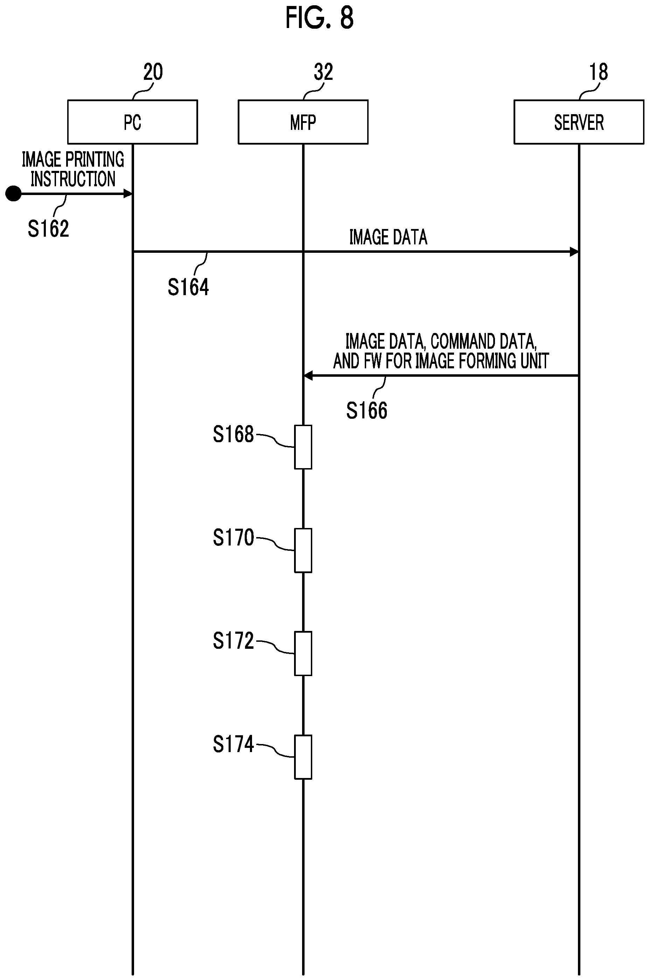

Fig. 8 shows the operation procedure of the information use environment 10 and the operation procedure of the multifunction peripheral 32 according to the present modification example. In Fig. 8, it is assumed that the multifunction peripheral 32 has already executed the procedure of S100, as in the first execution example.

### (Operation Procedure of Information Use Environment 10 and Operation Procedure of Multifunction Peripheral 32)

As shown in Fig. 8, the user 21 first inputs an instruction to print based on image data to the computer 20 (S162). Then, the CPU 61 of the computer 20 transmits the image data to be printed to the information management server 18 (S164).

Next, the CPU 81 of the information management server 18 that has received the data from the computer 20 transmits the image data, command data including a command to print the image data, and the firmware 52F for the image forming unit to the multifunction peripheral 32 (S166). The CPU 41 of the multifunction peripheral 32 that has received the data from the information management server 18 stores the received data in the RAM 42.

Next, the CPU 41 of the multifunction peripheral 32 loads the firmware 52F for the image forming unit, which is included in the received data, into the RAM 42 (S168). In other words, the CPU 41 makes the firmware 52F for the image forming unit available by referring to the RAM 42.

After that, the CPU 41 executes procedures related to S168 to S174 that are equivalent to the procedures related to S108 to S114.

In the above procedure, the communication in S166 that is received by the CPU 41 of the multifunction peripheral 32 is based on the print instruction from the user 21 in S162. Therefore, in the present exemplary embodiment, it can be said that the CPU 41 receives firmware and command data from the user 21.

In the present modification example, the same actions and effects as the first execution example may be obtained by following the same procedures as the first execution example.

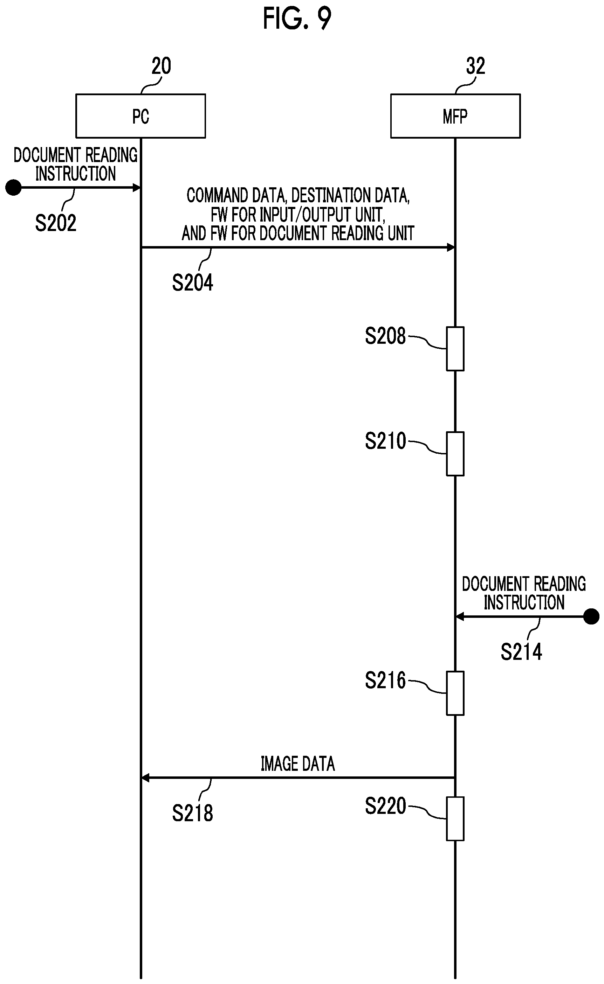

Next, a second execution example of the present exemplary embodiment will be described with reference to Fig. 9.

### [Second Execution Example]

In a second execution example, a user 21 who uses a computer 20 reads a document using a multifunction peripheral 32 and creates image data. The procedure of the present example will be described with reference to Fig. 9.

### (Operation Procedure of Information Use Environment 10 and Operation Procedure of Multifunction Peripheral 32)

Fig. 9 is a sequence diagram showing an example in which the multifunction peripheral 32 according to the present example communicates with the computer 20 and executes a document reading function. In Fig. 9, it is assumed that the multifunction peripheral 32 has already executed the procedure of S100, as in the first execution example. That is, in a case in which the user 21 operates the computer 20 to use the document reading function based on image data, the procedure shown in Fig. 9 is executed.

As shown in Fig. 9, the user 21 first inputs an instruction to read a document based on image data to the computer 20 (S202). The CPU 61 of the computer 20 then transmits, to the multifunction peripheral 32, command data including a command to read and transmit the document, and destination data including a transmission destination of the image data (S204). Furthermore, the CPU 61 of the computer 20 transmits the firmware 50F for the input/output unit and the firmware 54F for the document reading unit to the multifunction peripheral 32 (S204). The CPU 41 of the multifunction peripheral 32 that has received the data from the computer 20 stores the received data in the RAM 42.

Next, the CPU 41 of the multifunction peripheral 32 loads the firmware 54F for the document reading unit, which is included in the received data, into the RAM 42 (S208). In other words, the CPU 41 makes the firmware 54F for the document reading unit available by referring to the RAM 42.

In addition, the CPU 41 of the multifunction peripheral 32 loads the firmware 50F for the input/output unit, which is included in the received data, into the RAM 42 (S208). In other words, the CPU 41 makes the firmware 50F for the input/output unit available by referring to the RAM 42.

Next, the CPU 41 of the multifunction peripheral 32 starts up the document reading unit 54 using the firmware 54F for the document reading unit loaded in the RAM 42 (S210). In other words, the CPU 41 starts up the document reading unit 54 based on a procedure defined in the firmware 54F for the document reading unit loaded in the RAM 42.

In addition, the CPU 41 of the multifunction peripheral 32 starts up the input/output unit 50 using the firmware 50F for the input/output unit loaded in the RAM 42 (S210). In other words, the CPU 41 starts up the input/output unit 50 based on a procedure defined in the firmware 50F for the input/output unit loaded in the RAM 42.

In a case in which the CPU 41 determines that the start-up of the input/output unit 50 and the document reading unit 54 is completed, the CPU 41 permits the reception of an input instruction from the user 21.

Then, the user 21 inputs an instruction to read the document to the input/output unit 50 (S214). Then, the CPU 41 of the multifunction peripheral 32 reads the document and creates image data (S216).

Next, the CPU 41 refers to the destination data and transmits the image data (S218). More specifically, the CPU 41 refers to the destination data and transmits the image data to a transmission destination of the image data that is included in the destination data. Furthermore, in a case in which the CPU 41 determines that the procedure for transmitting image data is completed, that is, in a case in which the CPU 41 determines that reading of the document is completed, the CPU 41 executes the next procedure of S220.

Next, the CPU 41 of the multifunction peripheral 32 restarts the multifunction peripheral 32 (S220). More specifically, the CPU 41 ends the software operating on the multifunction peripheral 32 based on the main firmware 56F operating on the multifunction peripheral 32, and releases the storage area that has been used in the RAM 42. Thereafter, the CPU 41 of the multifunction peripheral 32 executes a boot loader (not shown) to read the main firmware 56F, and ends the series of procedures.

Here, the CPU 41 of the multifunction peripheral 32 starts up the communication unit 56 in order to execute the main firmware 56F. In other words, after executing the procedure of S220, the CPU 41 executes the procedure of S200 again. In other words, the CPU 41 waits for reception of communication again.

In the above procedure, the communication in S204 that is received by the CPU 41 of the multifunction peripheral 32 is based on the document reading instruction from the user 21 in S202. Therefore, in the present exemplary embodiment, it can be said that the CPU 41 receives firmware and command data from the user 21.

Next, the actions and effects of the computer 20 and the multifunction peripheral 32 in the present exemplary embodiment operating in the above procedure will be described.

### (Actions and Effects)

The CPU 41 of the multifunction peripheral 32 according to the present example receives, from the user 21, firmware 54F for a document reading unit and command data which is data for commanding the document reading unit 54. The CPU 41 also receives, from the user 21, firmware 50F for an input/output unit and command data which is data for commanding the input/output unit 50. The CPU 41 also receives input operations made by the user 21 to the input/output unit 50. The CPU 41 then executes the firmware 54F for the document reading unit received from the user 21 to operate the document reading unit 54, and causes the document reading unit 54 to read a document as a command included in the command data.

Therefore, with the multifunction peripheral 32 according to the present example, in a case in which a user 21 uses a multifunction peripheral 32 that is disposed in a location that the user 21 cannot trust, the firmware 50F for the input/output unit and firmware 54F for the document reading unit provided from the computer 20 that the user 21 uses are executed. In other words, the user 21 may use the multifunction peripheral 32 by executing the software desired by the user 21.

According to the present example, other actions and effects can be obtained similarly to the second execution example.

Next, a modification example of the second execution example will be described.

### <Modification Example>

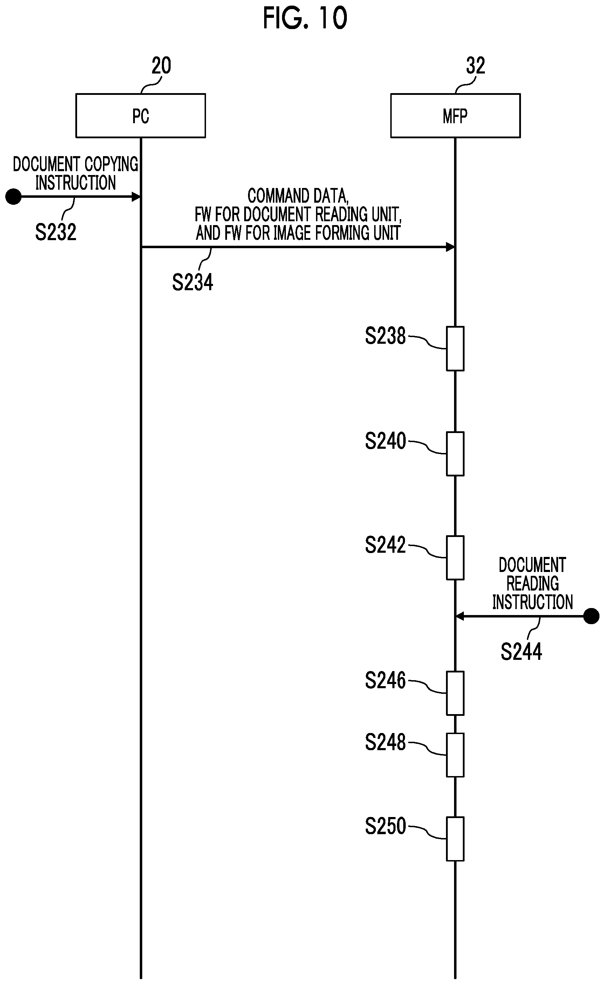

Fig. 10 shows the operation procedure of the information use environment 10 and the operation procedure of the multifunction peripheral 32 according to the present modification example. In Fig. 10, it is assumed that the multifunction peripheral 32 has already executed the procedure of S100, as in the second execution example.

### (Operation Procedure of Information Use Environment 10 and Operation Procedure of Multifunction Peripheral 32)

As shown in Fig. 10, the user 21 first inputs an instruction to copy a document based on image data to the computer 20 (S232). The CPU 61 of the computer 20 then transmits, to the multifunction peripheral 32, command data including a command to read and transmit the document (S234). Furthermore, the CPU 61 of the computer 20 transmits the firmware 50F for the input/output unit, the firmware 52F for the image forming unit, and the firmware 54F for the document reading unit to the multifunction peripheral 32 (S234). The CPU 41 of the multifunction peripheral 32 that has received the data from the computer 20 stores the received data in the RAM 42.

Next, the CPU 41 of the multifunction peripheral 32 loads the firmware 54F for the document reading unit, which is included in the received data, into the RAM 42 (S238). In other words, the CPU 41 makes the firmware 54F for the document reading unit available by referring to the RAM 42.

In addition, the CPU 41 of the multifunction peripheral 32 loads the firmware 52F for the image forming unit, which is included in the received data, into the RAM 42 (S238). In other words, the CPU 41 makes the firmware 52F for the image forming unit available by referring to the RAM 42.

In addition, the CPU 41 of the multifunction peripheral 32 loads the firmware 50F for the input/output unit, which is included in the received data, into the RAM 42 (S238). In other words, the CPU 41 makes the firmware 50F for the input/output unit available by referring to the RAM 42.

Next, the CPU 41 of the multifunction peripheral 32 starts up the document reading unit 54 using the firmware 54F for the document reading unit loaded in the RAM 42 (S240). In other words, the CPU 41 starts up the document reading unit 54 based on a procedure defined in the firmware 54F for the document reading unit loaded in the RAM 42.

In addition, the CPU 41 of the multifunction peripheral 32 starts up the image forming unit 52 using the firmware 52F for the image forming unit loaded in the RAM 42 (S240). In other words, the CPU 41 starts up the image forming unit 52 based on a procedure defined in the firmware 52F for the image forming unit loaded in the RAM 42.

In addition, the CPU 41 of the multifunction peripheral 32 starts up the input/output unit 50 using the firmware 50F for the input/output unit loaded in the RAM 42 (S240). In other words, the CPU 41 starts up the input/output unit 50 based on a procedure defined in the firmware 50F for the input/output unit loaded in the RAM 42.

In a case in which the CPU 41 determines that the start-up of the input/output unit 50, the image forming unit 52, and the document reading unit 54 is completed, the CPU 41 permits the reception of an input instruction from the user 21 (S242).

Then, the user 21 inputs an instruction to read the document to the input/output unit 50 (S244). Then, the CPU 41 of the multifunction peripheral 32 reads the document and creates image data (S246).

Next, the CPU 41 refers to the created image data and prints the image data (S248). More specifically, the CPU 41 reads command data stored in the RAM 42 and causes the image forming unit 52 to execute printing of the image data. Furthermore, in a case in which the CPU 41 determines that the procedure included in the command data is completed, that is, in a case in which the CPU 41 determines that printing is completed, the CPU 41 executes the next procedure of S250.

After that, the CPU 41 executes a procedure related to S250 that is equivalent to the procedure related to S220.

In the present modification example, the same actions and effects as the second execution example can be obtained by following the same procedures as the second execution example.

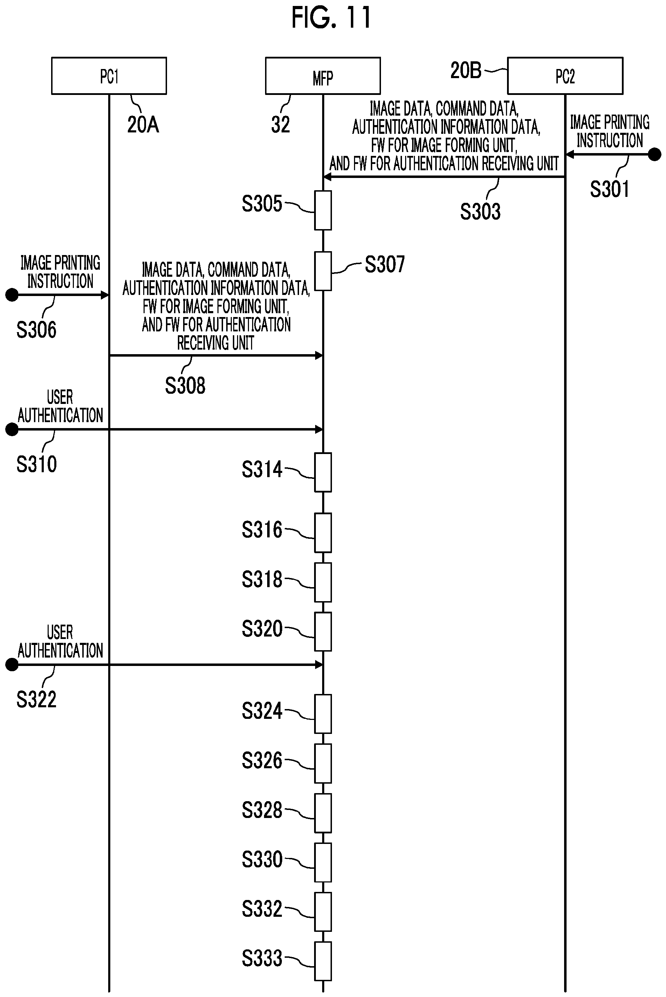

Next, a third execution example of the present exemplary embodiment will be described with reference to Fig. 11.

### [Third Execution Example]

In a third execution example, a user 21 who uses a computer 20 reads a document using a multifunction peripheral 32 and creates image data. The procedure of the present example will be described with reference to Fig. 11.

### (Operation Procedure of Information Use Environment 10 and Operation Procedure of Multifunction Peripheral 32)

Fig. 11 is a sequence diagram showing an example in which the multifunction peripheral 32 according to the present example communicates with the computer 20 and executes a document reading function. In Fig. 11, it is assumed that the multifunction peripheral 32 has already executed the procedure of 5100, as in the first execution example. That is, in a case in which the user 21 operates the computer 20 to use the document reading function based on image data, the procedure shown in Fig. 11 is executed.

As shown in Fig. 11, the second user 21B first inputs an instruction to print based on image data to the computer 20B (S301). Then, the CPU 61 of the computer 20B transmits the image data to be printed, command data including a command to print the image data, and identification information data for identifying the second user 21B to the multifunction peripheral 32. Furthermore, the CPU 61 of the computer 20B transmits the firmware 52F for the image forming unit and the firmware 58F for the authentication receiving unit to the multifunction peripheral 32 (S303). The CPU 41 of the multifunction peripheral 32 that has received the data from the computer 20B stores the received data in the flash memory 43 (S303).

In addition, the CPU 41 of the multifunction peripheral 32 loads the firmware 58F for the authentication receiving unit, which is included in the received data, into the RAM 42 (S305). In other words, the CPU 41 makes the firmware 58F for the authentication receiving unit available by referring to the RAM 42.

Next, the CPU 41 of the multifunction peripheral 32 starts up the authentication receiving unit 58 using the firmware 58F for the authentication receiving unit loaded in the RAM 42 (S307). In other words, the CPU 41 starts up the authentication receiving unit 58 based on a procedure defined in the firmware 58F for the authentication receiving unit loaded in the RAM 42.

Also, as shown in Fig. 11, the first user 21A first inputs an instruction to print based on image data to the computer 20A (S306). Then, the CPU 61 of the computer 20A transmits the image data to be printed, command data including a command to print the image data, and identification information data for identifying the first user 21A to the multifunction peripheral 32. Furthermore, the CPU 61 of the computer 20A transmits the firmware 52F for the image forming unit and the firmware 58F for the authentication receiving unit to the multifunction peripheral 32 (S308). The CPU 41 of the multifunction peripheral 32 that has received the data from the computer 20A stores the received data in the flash memory 43 (S308).

Here, the CPU 41 of the multifunction peripheral 32 receives authentication from the first user 21A (S310). More specifically, the CPU 41 acquires the authentication information of the first user 21 A who uses the multifunction peripheral 32 from the authentication receiving unit 58 (S314). Then, the CPU 41 compares the authentication information of the first user 21A with the identification information data received together with the firmware 58F for the authentication receiving unit loaded in the RAM 42 (S316).

However, in the example of Fig. 11, the procedure of S307 is executed, and the authentication receiving unit 58 is started up based on the firmware 58F for the authentication receiving unit transmitted by the second user 21B. Therefore, the CPU 41 makes a negative determination in the procedure of S316.

Then, the CPU 41 restarts the multifunction peripheral 32 (S318). More specifically, the CPU 41 ends the software operating on the multifunction peripheral 32 based on the main firmware 56F operating on the multifunction peripheral 32, and releases the storage area that has been used in the RAM 42. Thereafter, the CPU 41 of the multifunction peripheral 32 executes a boot loader (not shown) to read the main firmware 56F.

Next, the CPU 41 starts up the authentication receiving unit 58 again based on the firmware 58F for the authentication receiving unit stored in the flash memory 43 (S320). More specifically, the CPU 41 starts up the authentication receiving unit 58 based on another firmware 58F for an authentication receiving unit, instead of the firmware 58F for the authentication receiving unit used immediately before (the procedure of S318). In the example of the present description, the CPU 41 starts up the authentication receiving unit 58 based on the firmware 58F for the authentication receiving unit transmitted by the first user 21A in S308.

Next, the CPU 41 receives authentication from the first user 21A (S322). More specifically, the CPU 41 acquires the authentication information of the first user 21 A who uses the multifunction peripheral 32 from the authentication receiving unit 58. Then, the CPU 41 compares the authentication information of the first user 21A with the identification information data received together with the firmware 58F for the authentication receiving unit loaded in the RAM 42 (S324).

In the example of Fig. 11, the procedure of S320 is executed, and the authentication receiving unit 58 is started up based on the firmware 58F for the authentication receiving unit transmitted by the first user 21A. Therefore, the CPU 41 makes an affirmative determination in the procedure of S324.

Next, the CPU 41 of the multifunction peripheral 32 loads the firmware 52F for the image forming unit transmitted from the first user 21Ainto the RAM 42 (S326). In other words, the CPU 41 makes the firmware 52F for the image forming unit available by referring to the RAM 42.

Next, the CPU 41 of the multifunction peripheral 32 starts up the image forming unit 52 using the firmware 52F for the image forming unit loaded in the RAM 42 (S328). In other words, the CPU 41 starts up the image forming unit 52 based on a procedure defined in the firmware 52F for the image forming unit loaded in the RAM 42. Furthermore, in a case in which the CPU 41 determines that the start-up of the image forming unit 52 is completed, the CPU 41 executes the next procedure of S330.

Next, the CPU 41 of the multifunction peripheral 32 prints the image data based on the command data included in the data received from the computer 20 (S330). More specifically, the CPU 41 reads command data stored in the RAM 42 and causes the image forming unit 52 to execute printing of the image data. Furthermore, in a case in which the CPU 41 determines that the procedure included in the command data is completed, that is, in a case in which the CPU 41 determines that printing is completed, the CPU 41 executes the next procedure of S332.

Then, the CPU 41 restarts the multifunction peripheral 32 (S332). More specifically, the CPU 41 ends the software operating on the multifunction peripheral 32 based on the main firmware 56F operating on the multifunction peripheral 32, and releases the storage area that has been used in the RAM 42. Thereafter, the CPU 41 of the multifunction peripheral 32 executes a boot loader (not shown) to read the main firmware 56F.

Next, the CPU 41 starts up the authentication receiving unit 58 again based on the firmware 58F for the authentication receiving unit stored in the flash memory 43 (S333). More specifically, the CPU 41 starts up the authentication receiving unit 58 based on another firmware 58F for an authentication receiving unit, instead of the firmware 58F for the authentication receiving unit used immediately before (the procedure of S332). In the example of the present description, the CPU 41 starts up the authentication receiving unit 58 based on the firmware 58F for the authentication receiving unit transmitted by the second user 21B in S303.

The subsequent procedures are the same as the procedures from S322 to S332.

In the above procedure, the CPU 41 receives image data during communication in S308. This image data is referred to by the image forming unit 52 in the procedure of S330, and therefore can be said to be an example of "reference data referred to by the functional configuration unit" in the present exemplary embodiment. In the above procedure, the CPU 41 receives authentication information data during communication in S308. This authentication information data is associated with the image data referred to by the image forming unit 52 in the procedure of S330, and therefore can be said to be an example of "authentication information associated with the operating software" in the present exemplary embodiment.

Next, the actions and effects of the computer 20 and the multifunction peripheral 32 in the present exemplary embodiment operating in the above procedure will be described.

### (Actions and Effects)

The multifunction peripheral 32 according to the present execution example further receives the authentication information data associated with the firmware 52F for the image forming unit and receives identification information. Furthermore, the multifunction peripheral 32 operates the image forming unit 52 in a case in which the identification information and the authentication information data correspond to each other. Therefore, with the multifunction peripheral 32 in the present execution example, security in the case of using the multifunction peripheral 32 may be improved for the first user 21A and the second user 21B who use the multifunction peripheral 32, compared to the case in which the image forming unit 52 is operated without checking the correspondence between the identification information and authentication information data.

According to the present example, other actions and effects can be obtained similarly to the second execution example.

In the above description, the firmware has been described with the same reference numerals, but the firmware does not need to have the same software version or issuer. That is, it is sufficient that each user 21 can operate the functional configuration unit based on the software transmitted from the computer 20 that he or she uses.

Next, a modification example of the third execution example will be described.

### <Modification Example>

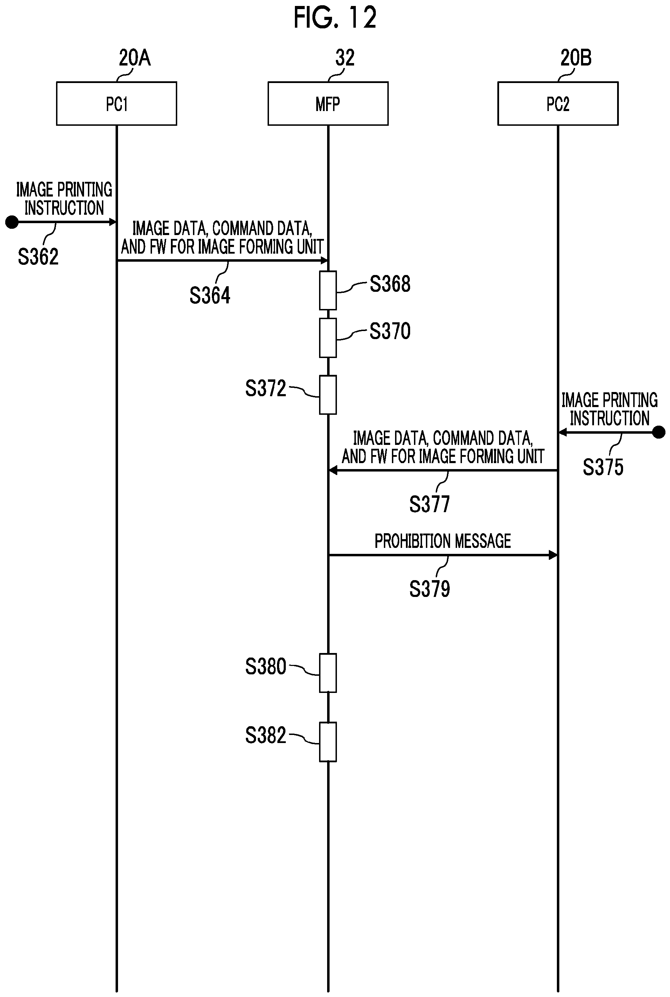

Fig. 12 shows the operation procedure of the information use environment 10 and the operation procedure of the multifunction peripheral 32 according to the present modification example. In Fig. 12, it is assumed that the multifunction peripheral 32 has already executed the procedure of S 100, as in the third execution example.

### (Operation Procedure of Information Use Environment 10 and Operation Procedure of Multifunction Peripheral 32)

As shown in Fig. 12, first, the first user 21A first inputs an instruction to print based on image data to the computer 20A (S362). Then, the CPU 61 of the computer 20A transmits the image data to be printed and command data including a command to print the image data to the multifunction peripheral 32. Furthermore, the CPU 61 of the computer 20A transmits the firmware 52F for the image forming unit and the firmware 58F for the authentication receiving unit to the multifunction peripheral 32 (S364). The CPU 41 of the multifunction peripheral 32 that has received the data from the computer 20A stores the received data in the RAM 42 (S368).

Next, the CPU 41 of the multifunction peripheral 32 loads the firmware 52F for the image forming unit transmitted from the first user 21Ainto the RAM 42 (S370). In other words, the CPU 41 makes the firmware 52F for the image forming unit available by referring to the RAM 42.

Next, the CPU 41 of the multifunction peripheral 32 starts up the image forming unit 52 using the firmware 52F for the image forming unit loaded in the RAM 42 (S372). In other words, the CPU 41 starts up the image forming unit 52 based on a procedure defined in the firmware 52F for the image forming unit loaded in the RAM 42.

Here, the second user 21B inputs an instruction to print based on image data to the computer 20B (S375). Then, the CPU 61 of the computer 20B transmits the image data to be printed and command data including a command to print the image data to the multifunction peripheral 32. Furthermore, the CPU 61 of the computer 20B transmits the firmware 52F for the image forming unit and the firmware 58F for the authentication receiving unit to the multifunction peripheral 32 (S377).

However, as shown in Fig. 12, the CPU 41 of the multifunction peripheral 32 has already loaded firmware for an image forming unit in the RAM 42. In this case, as shown in Fig. 12, the CPU 41 transmits, to the computer 20B, a prohibition message including a message indicating that data communication is not permitted (S379). In other words, as shown in Fig. 12, the CPU 41 restricts firmware for operating the configuration units from being received from a plurality of users 21 at the same time.

In a case in which the CPU 61 of the computer 20B receives the prohibition message, the CPU 61 displays, on the output unit 72, a message indicating that printing is restricted.

Furthermore, in a case in which the CPU 41 determines that the start-up of the image forming unit 52 is completed, the CPU 41 prints the image data based on the command data included in the data received from the computer 20A (S380). More specifically, the CPU 41 reads command data stored in the RAM 42 and causes the image forming unit 52 to execute printing of the image data. Furthermore, in a case in which the CPU 41 determines that the procedure included in the command data is completed, that is, in a case in which the CPU 41 determines that printing is completed, the CPU 41 executes the next procedure of S382.

Then, the CPU 41 restarts the multifunction peripheral 32 (S382). More specifically, the CPU 41 ends the software operating on the multifunction peripheral 32 based on the main firmware 56F operating on the multifunction peripheral 32, and releases the storage area that has been used in the RAM 42. Thereafter, the CPU 41 of the multifunction peripheral 32 executes a boot loader (not shown) to read the main firmware 56F.

Here, the CPU 41 of the multifunction peripheral 32 starts up the communication unit 56 in order to execute the main firmware 56F. In other words, after executing the procedure of S382, the CPU 41 executes the procedure of S100 again. In other words, the CPU 41 waits for reception of communication again.

In the present modification example, the same actions and effects as the third execution example can be obtained by following the same procedures as the third execution example.

### <Other Execution Examples>

In the above description, the user 21 does not re-transmit the firmware after transmitting the firmware together with the command data. The CPU 61 of the computer 20 may transmit the firmware together with the command data in advance, and in a case in which command data for operating the same functional configuration unit is further transmitted before the command based on the command data is executed, the firmware may not be transmitted. In other words, in a case in which the CPU 61 has already transmitted firmware, the CPU 61 may not transmit the same firmware until the command data is executed.

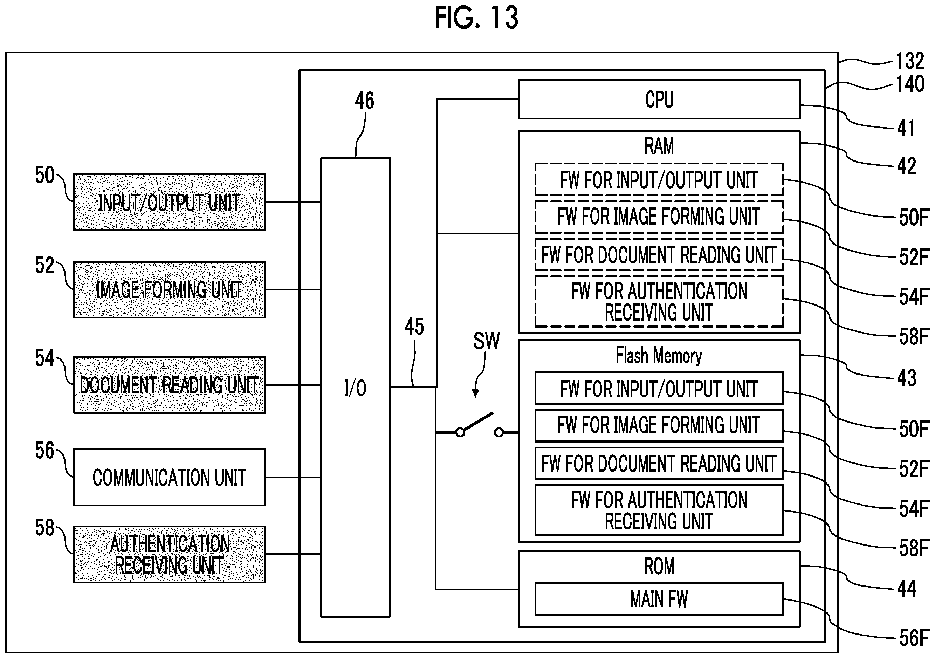

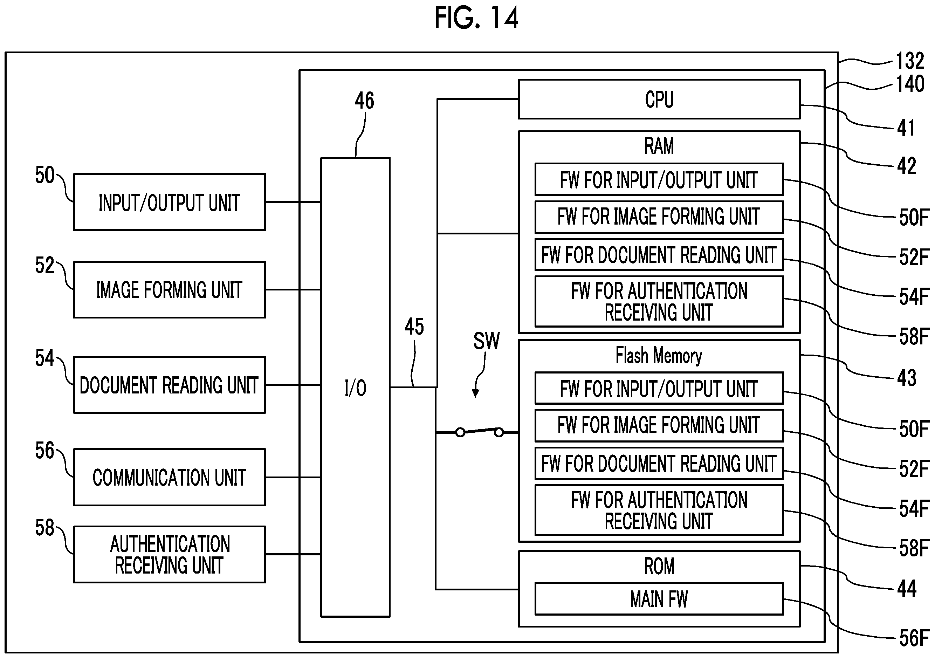

Next, a configuration and an operation of a multifunction peripheral 132 according to a second exemplary embodiment of the present disclosure will be described with reference to Figs. 13 to 15. In addition, in Fig. 13 and Fig. 14, the same configurations as in the first exemplary embodiment are denoted by the same reference numerals as in the first exemplary embodiment, and the description thereof will be omitted.

### [Configuration]

Figs. 13 and 14 show a hardware configuration of the multifunction peripheral 132 in the present exemplary embodiment. As shown in Figs. 13 and 14, the multifunction peripheral 132 includes a control unit 140, which further includes a switch SW in addition to the configuration units of the control unit 40 in the first exemplary embodiment.

As shown in Figs. 13 and 14, the switch SW is disposed on a control bus 45 that connects the flash memory 43 to other configuration units. In other words, the switch SW switches between a state in which the flash memory 43 can be connected to other configuration units and a state in which the flash memory 43 is disconnected.

As shown in Figs. 13 and 14, the flash memory 43 records the firmware 50F for the input/output unit, the firmware 52F for the image forming unit, the firmware 54F for the document reading unit, and the firmware 58F for the authentication receiving unit.

Therefore, as shown in Fig. 14, in the multifunction peripheral 132 of the present exemplary embodiment, in a case in which the switch SW is in an ON state, each piece of firmware recorded in the flash memory 43 can be stored in the RAM 42. In other words, in a case in which the switch SW is in the ON state, the multifunction peripheral 132 in the present exemplary embodiment is capable of operating the functional configuration units without relying on an external device.

In other words, in a case in which the switch SW is in the OFF state as shown in Fig. 13, the firmware recorded in the flash memory 43 cannot be transferred to the RAM 42. The operation in this case is similar to the operation of the multifunction peripheral 32 in the first exemplary embodiment.

The switch SW may be of any type as long as the switch SW is capable of switching the connection between the flash memory 43 and other configuration units. An example of the switch SW is a relay such as a relay or a solid-state relay that is operated by the control operation of the CPU 41. The switch SW has, for example, a configuration that is manually operated by the user 21 from outside the multifunction peripheral 132, such as a toggle switch or a dip switch. It is preferable that the switch SW is configured to directly cut off the connection of the control bus 45 in a case in which the switch SW is in an open state, for example.

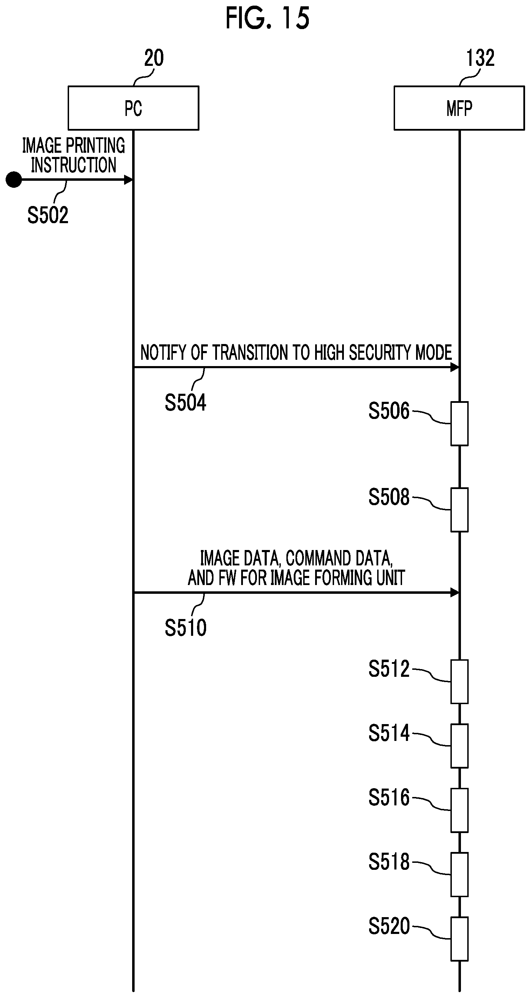

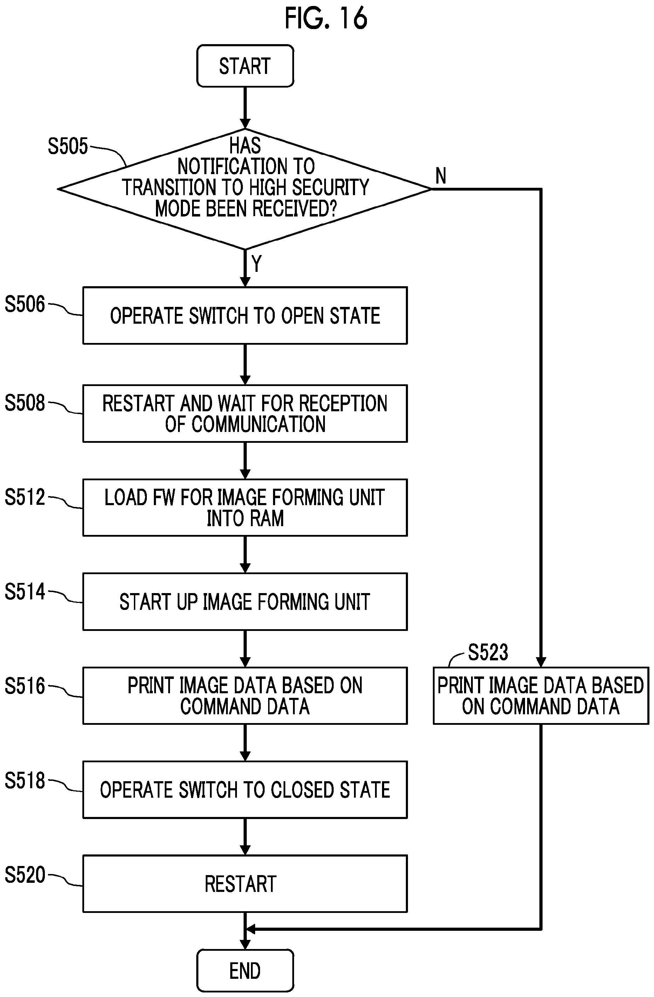

Next, a procedure for operating the functional configuration units, which is performed by the CPU 41 of the multifunction peripheral 132 in the present exemplary embodiment, will be described with reference to Figs. 15 and 16. This procedure is started by the CPU 41 executing the main firmware 56F. The switch SW is configured to be operated by the control operation of the CPU 41. At the start point in time of the procedure shown in Fig. 15, the switch SW of the multifunction peripheral 132 is in a closed state (the state shown in Fig. 14).

### (Operation Procedure of Information Use Environment 10 and Operation Procedure of Multifunction Peripheral 132)

In the present exemplary embodiment, a user 21 who desires to use firmware that he or she owns first inputs an instruction to print based on image data to the computer 20, as shown in Fig. 15 (S502). Then, the CPU 61 of the computer 20 notifies the multifunction peripheral 132 of a transition to a high security mode (S504).

Next, the CPU 41 of the multifunction peripheral 132 determines whether or not the received notification includes a notification to transition to a high security mode (S505). More specifically, the CPU 41 of the multifunction peripheral 132 makes an affirmative determination in the procedure of S505. Then, the CPU 41 of the multifunction peripheral 132 that has received the notification to transition to the high security mode operates the switch SW to the open state (the state in Fig. 13) (S506). Accordingly, the flash memory 43 of the multifunction peripheral 132 is no longer connected to the other configuration units.

Next, as shown in Figs. 15 and 16, the CPU 41 of the multifunction peripheral 132 restarts the multifunction peripheral 132 (S508). More specifically, the CPU 41 ends the software operating on the multifunction peripheral 132 based on the main firmware 56F operating on the multifunction peripheral 132, and releases the storage area that has been used in the RAM 42. Thereafter, the CPU 41 of the multifunction peripheral 132 executes a boot loader (not shown) to read the main firmware 56F and operates the communication unit 56 to receive communication from an external device.

Next, the CPU 61 of the computer 20 transmits the image data to be printed, command data including a command to print the image data, and the firmware 52F for the image forming unit to the multifunction peripheral 132 (S510). The CPU 41 of the multifunction peripheral 132 that has received the data from the computer 20 stores the received data in the RAM 42.

Next, the CPU 41 of the multifunction peripheral 132 loads the firmware 52F for the image forming unit, which is included in the received data, into the RAM 42 (S512). In other words, the CPU 41 makes the firmware 52F for the image forming unit available by referring to the RAM 42.

Next, the CPU 41 of the multifunction peripheral 132 starts up the image forming unit 52 using the firmware 52F for the image forming unit loaded in the RAM 42 (S514). In other words, the CPU 41 starts up the image forming unit 52 based on a procedure defined in the firmware 52F for the image forming unit loaded in the RAM 42. Furthermore, in a case in which the CPU 41 determines that the start-up of the image forming unit 52 is completed, the CPU 41 executes the next procedure of S112.

Next, the CPU 41 of the multifunction peripheral 132 prints the image data based on the command data included in the data received from the computer 20 (S516). More specifically, the CPU 41 reads command data stored in the RAM 42 and causes the image forming unit 52 to execute printing of the image data. Furthermore, in a case in which the CPU 41 determines that the procedure included in the command data is completed, that is, in a case in which the CPU 41 determines that printing is completed, the CPU 41 executes the next procedure of S518.

Next, the CPU 41 of the multifunction peripheral 132 operates the switch SW to a closed state (S518). In other words, the CPU 41 connects the flash memory 43 of the multifunction peripheral 132 to the other configuration units.

Next, the CPU 41 of the multifunction peripheral 132 restarts the multifunction peripheral 132 (S520). More specifically, the CPU 41 ends the software operating on the multifunction peripheral 132 based on the main firmware 56F operating on the multifunction peripheral 132, and releases the storage area that has been used in the RAM 42. Thereafter, the CPU 41 of the multifunction peripheral 132 executes a boot loader (not shown) to read the main firmware 56F, transitions to the state shown in Fig. 14, and then ends the series of procedures.

In the present exemplary embodiment, in a case in which the user 21 does not desire to use firmware that he or she owns, the multifunction peripheral 132 is not notified of the transition to the high security mode. In other words, in a case in which the user 21 who does not have the firmware in the computer 20 uses the multifunction peripheral 132, the transition to the high security mode is not notified.

In this case, the computer 20 used by the user 21 transmits only image data and command data to the multifunction peripheral 132. Therefore, in the procedure shown in S505 of Fig. 16, the CPU 41 of the multifunction peripheral 132 makes a negative determination. In this case, the CPU 41 of the multifunction peripheral 132 prints the image data based on the command data included in the data received from the computer 20 (S523). Thereafter, the CPU 41 of the multifunction peripheral 130 ends the series of procedures.

In this manner, in a case in which the multifunction peripheral 132 in the present exemplary embodiment is not notified of the transition to the high security mode, the multifunction peripheral 132 operates in the same manner as in the case in the related art. In other words, the multifunction peripheral 132 in the present exemplary embodiment can be used by both a user 21 who uses a computer 20 having firmware and a user 21 who uses a computer 20 not having firmware.

Next, the actions and effects of the multifunction peripheral 132 in the present exemplary embodiment will be described.

### (Actions and Effects)

In the multifunction peripheral 132 according to the present exemplary embodiment, other operating software for operating the functional configuration units is recorded in the flash memory 43, and firmware is received from the user 21 in a state in which the execution of the other operating software is stopped. Therefore, with the multifunction peripheral 132 according to the present exemplary embodiment, even a user 21 who does not have the firmware may use the multifunction peripheral 132. Furthermore, the user 21 who has the firmware may use the multifunction peripheral 132 in a manner that improves security.

In the present exemplary embodiment, the same actions and effects as the first exemplary embodiment can be obtained by following the same procedures as the first exemplary embodiment.

Next, a modification example of the second exemplary embodiment will be described. In the modification example of the second exemplary embodiment, the switch SW is configured to be manually operated by the user 21.

### <Modification Example>

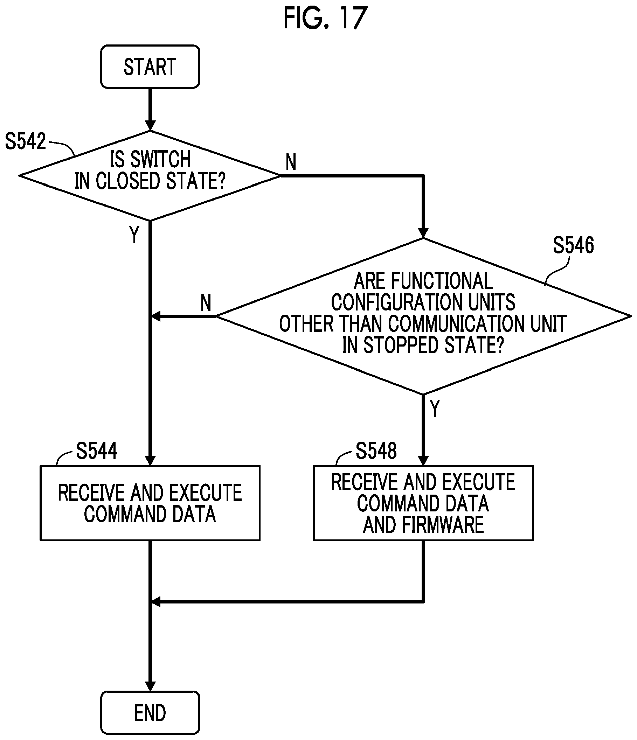

Fig. 17 shows the operation procedure of the information use environment 10 and the operation procedure of the multifunction peripheral 32 according to the present modification example. In Fig. 17, it is assumed that the multifunction peripheral 32 has already executed the procedure of S100, as in the first execution example.

### (Procedure for Operating Functional Configuration Unit)

First, the CPU 41 determines whether or not the switch SW is in a closed state (S542). In other words, the CPU 41 determines whether or not the flash memory 43 is disconnected from the other configuration units as shown in Fig. 13. In a case in which the switch SW is in the closed state (the state shown in Fig. 14), the CPU 41 makes an affirmative determination. On the other hand, in a case in which the switch SW is in the OFF state (the state shown in Fig. 13), the CPU 41 makes a negative determination. In a case in which the CPU 41 makes an affirmative determination, the process proceeds to the procedure of S544, and in a case in which the CPU 41 makes a negative determination, the process proceeds to the procedure of S546.

Next, the CPU 41 receives command data (S544). More specifically, the CPU 41 receives command data for operating the input/output unit 50, the image forming unit 52, the document reading unit 54, and the authentication receiving unit 58. In other words, the CPU 41 receives data such as image data, command data, and authentication information as described in the first exemplary embodiment.

The CPU 41 then operates the functional configuration units based on the received data. In other words, the CPU 41 operates the functional configuration units based on the command data included in the received data. Then, the CPU 41 ends the procedure for operating the functional configuration units.

In a case in which the result of the procedure at S542 is negative, the CPU 41 further determines whether or not the functional configuration units other than the communication unit 56 are in a stopped state (S546). More specifically, the CPU 41 determines whether or not the firmware for operating the functional configuration unit excluding the communication unit 56 is stored in the RAM 42. In other words, the CPU 41 determines whether or not firmware other than the main firmware 56F is stored in the RAM 42. In a case in which firmware other than the main firmware 56F is stored in the RAM 42, the CPU 41 makes an affirmative determination. On the other hand, in a case in which firmware other than the main firmware 56F is not stored in the RAM 42, the CPU 41 makes a negative determination. In a case in which the CPU 41 makes an affirmative determination, the process proceeds to the procedure of S544, and in a case in which the CPU 41 makes a negative determination, the process proceeds to the procedure of S548.

The CPU 41 receives the firmware that causes the functional configuration unit excluding the communication unit 56 to operate (S548). More specifically, the CPU 41 receives data including the firmware 50F for the input/output unit, the firmware 52F for the image forming unit, the firmware 54F for the document reading unit, and the firmware 58F for the authentication receiving unit. Furthermore, the CPU 41 receives command data (S548). More specifically, the CPU 41 receives data such as image data, command data, and authentication information as described in the first exemplary embodiment.

The above-mentioned procedure of S548 corresponds to the procedure of 5100 executed by the CPU 41 in the multifunction peripheral 32 of the first exemplary embodiment. In other words, the procedure of S548 is the same as that shown in the first exemplary embodiment. After executing the procedure of S548, the CPU 41 ends the procedure for operating the functional configuration unit.

In this manner, the CPU 41 in the present exemplary embodiment determines whether or not the firmware 50F for the input/output unit and the firmware 52F for the image forming unit, the firmware 54F for the document reading unit, and the firmware 58F for the authentication receiving unit are stored in the RAM 42. In a case in which the firmware 50F for the input/output unit and the firmware 52F for the image forming unit, the firmware 54F for the document reading unit, and the firmware 58F for the authentication receiving unit are not stored, the CPU 41 receives each piece of firmware. In other words, in a case in which the firmware 50F for the input/output unit and the firmware 52F for the image forming unit, the firmware 54F for the document reading unit, or the firmware 58F for the authentication receiving unit is stored in the RAM 42, the corresponding firmware can be said to be an example of "other operating software" in the present exemplary embodiment.

In the present modification example, the same actions and effects as the multifunction peripheral 132 of the second exemplary embodiment can be obtained.

In the above description, restarting refers to ending the software operating on the multifunction peripheral 32 and then executing the boot loader again. In the present exemplary embodiment, "restart" is not limited thereto, and may be, for example, turning off and then turning on the power of the multifunction peripheral 32 (a so-called cold reboot).

In the above description, "desired by the user 21" is not limited to desired by the user 21 himself or herself. The "desired by the user 21" includes a case in which the organization to which the user 21 belongs desires.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

In addition, the processes executed by the CPU 41 after reading the software (main firmware 56F) in each of the above exemplary embodiments may be executed by various processors other than the CPU. Examples of the processors in this case include a programmable logic device (PLD) whose circuit configuration can be changed after the manufacturing, such as a field-programmable gate array (FPGA), and a dedicated electric circuit that is a processor having a circuit configuration exclusively designed for executing specific processing, such as an application specific integrated circuit (ASIC). In addition, processing may be executed by one of these various processors, or may be executed by a configuration of two or more processors of the same type or different types (for example, a combination of a plurality of FPGAs, a combination of a CPU and an FPGA, and the like). Further, the hardware structure of these various processors is, more specifically, an electric circuit in which circuit elements such as semiconductor elements are combined.

While an aspect in which the processing program is stored (installed) in advance in the storage is described in each of the exemplary embodiments, the present disclosure is not limited thereto. The program may be provided in a form stored on a non-transitory storage medium such as a compact disk read only memory (CD-ROM), a digital versatile disk read only memory (DVD-ROM), and a USB memory. Further, the program may be downloaded from an external device via a network.

Although the exemplary embodiments of the present disclosure have been described above with reference to the accompanying drawings, it is clear that anyone with ordinary knowledge in the field of the art to which the present disclosure belongs can come up with various modifications or applications within the scope of the technical ideas described in the claims, and it is understood that these also naturally belong to the technical scope of the present disclosure.

The aspects of the present disclosure will be further described below.
(((1))) An information processing system comprising:
   a functional configuration unit; and
   a processor,
   wherein the processor is configured to:
      receive, from a user, operating software, which is software for operating the functional configuration unit, and command data for the functional configuration unit,
      operate the functional configuration unit based on the operating software received from the user, and
      cause the functional configuration unit to execute a command included in the command data.
(((2))) The information processing system according to (((1))), wherein the processor is configured to:
   further receive reference data referred to by the functional configuration unit; and
   cause the functional configuration unit to execute the command referring to the reference data.
(((3))) The information processing system according to (((1))) or (((2))), wherein the processor is configured to:
   store the operating software only in a volatile memory.
(((4))) The information processing system according to (((3))), wherein the processor is configured to:
   erase the operating software in a case in which the command of the functional configuration unit is completed.
(((5))) The information processing system according to any one of (((1))) to (((4))), wherein the processor is configured to:
   execute receiving software recorded on a non-rewritable recording medium to receive the operating software.
(((6))) The information processing system according to (((5))),
   wherein other operating software for operating the functional configuration unit is recorded in a memory, and
   the processor is configured to: receive the operating software from the user in a state in which execution of the other operating software is stopped.
(((7))) The information processing system according to any one of (((1))) to (((6))), wherein the processor is configured to:
   further receive authentication information associated with the operating software; receive identification information; and
   operate the functional configuration unit in a case in which the identification information and the authentication information correspond to each other.
(((8))) A program causing a processor to execute:
   receiving, from a user, operating software, which is software for operating a functional configuration unit, and command data for the functional configuration unit,
   operating the functional configuration unit based on the operating software received from the user, and
   causing the functional configuration unit to execute a command included in the command data.

With the image processing system according to (((1))), it is possible to use the information processing system by executing software desired by the user, for the user of the information processing system.

With the image processing system according to (((2))), it is possible to use a function based on a command in which the functional configuration unit refers to the reference data, for the user.

With the image processing system according to (((3))), it is possible to further improve security in a case of using the information processing system for the user of the information processing system, compared to a case in which operating software is also stored in non-volatile memory.

With the image processing system according to (((4))), it is possible to improve security for other user who uses the information processing system next in a case of using the information processing system, compared to in a case in which the operating software is next received in a state where the operating software is stored.

With the image processing system according to (((5))), it is easy to prevent reception software from being tampered with.

With the image processing system according to (((6))), in the information processing system in which a user who does not have operating software can also use the information processing system, it is possible to execute and use software desired by the user, for a user who has operating software.

With the image processing system according to (((7))), it is possible to improve security in a case of using the information processing system for the user who uses the information processing system, compared to a case in which the functional configuration unit is operated without checking a correspondence between identification information and authentication information data.

With the program according to (((8))), it is possible to use the information processing system by executing the software desired by the user, for the user of the information processing system.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

10: information use environment
12: internet
14: shared facility
16: in-facility network
18: information management server
20: computer
32: multifunction peripheral (example of information processing system)
40: control unit
41: CPU (example of processor)
42: RAM
43: flash memory
44: ROM
45: control bus
46: input/output interface
56F: main firmware (example of program)
50: input/output unit
52: image forming unit (example of functional configuration unit)
54: document reading unit (example of functional configuration unit)
56: communication unit
58: authentication receiving unit (example of functional configuration unit)
60: control unit
61: CPU
62: RAM
63: flash memory
65: control bus
66: input/output interface
67: multifunction peripheral driver
70: input unit
72: output unit
76: communication unit
80: control unit
81: CPU
82: RAM
83: flash memory
85: control bus
86: input/output interface
87: multifunction peripheral driver
90: input unit
92: output unit
96: communication unit
132: multifunction peripheral (example of information processing system)
50F: firmware for input/output unit (example of software for operating functional configuration unit)
52F: firmware for image forming unit (example of software for operating functional configuration unit)
54F: firmware for document reading unit (example of software for operating functional configuration unit)
58F: firmware for authentication receiving unit (example of software for operating functional configuration unit)

## Claims

1. An information processing system comprising:
a functional configuration unit; and
a processor,
wherein the processor is configured to:
receive, from a user, operating software, which is software for operating the functional configuration unit, and command data for the functional configuration unit,
operate the functional configuration unit based on the operating software received from the user, and
cause the functional configuration unit to execute a command included in the command data.

2. The information processing system according to claim 1, wherein the processor is configured to:
further receive reference data referred to by the functional configuration unit; and
cause the functional configuration unit to execute the command referring to the reference data.

3. The information processing system according to claim 1 or 2, wherein the processor is configured to:
store the operating software only in a volatile memory.

4. The information processing system according to claim 3, wherein the processor is configured to:
erase the operating software in a case in which the command of the functional configuration unit is completed.

5. The information processing system according to any one of claims 1 to 4, wherein the processor is configured to:
execute receiving software recorded on a non-rewritable recording medium to receive the operating software.

6. The information processing system according to claim 5,
wherein other operating software for operating the functional configuration unit is recorded in a memory, and
the processor is configured to: receive the operating software from the user in a state in which execution of the other operating software is stopped.

7. The information processing system according to any one of claims 1 to 6, wherein the processor is configured to:
further receive authentication information associated with the operating software;
receive identification information; and
operate the functional configuration unit in a case in which the identification information and the authentication information correspond to each other.

8. A program causing a processor to execute:
receiving, from a user, operating software, which is software for operating a functional configuration unit, and command data for the functional configuration unit,
operating the functional configuration unit based on the operating software received from the user, and
causing the functional configuration unit to execute a command included in the command data.

9. An information processing method comprising:
receiving, from a user, operating software, which is software for operating a functional configuration unit, and command data for the functional configuration unit,
operating the functional configuration unit based on the operating software received from the user, and
causing the functional configuration unit to execute a command included in the command data.
